# EUROPÄISCHE PATENTSCHRIFT

(11) **EP 2 160 534 B1**
(45) Veröffentlichungstag und Bekanntmachung des Hinweises auf die Patenterteilung: **17.04.2013**
(21) Anmeldenummer: 08773480.2
(22) Anmeldetag: 17.06.2008
(51) Int. Cl.: F16K 15/14, F16L 37/30, A61C 17/22, A46B 11/00

(54) **VENTILKOPPLUNG**
VALVE COUPLING
SYSTÈME D'ACCOUPLEMENT À CLAPETS

(30) Priorität: 29.06.2007 DE 102007030381; 22.12.2007 DE 102007062368
(43) Veröffentlichungstag der Anmeldung: 10.03.2010
(73) Patentinhaber: Braun GmbH, 61476 Kronberg/Taunus (DE)
(72) Erfinder: SAUER, Michael, 65520 Bad Camberg (DE); SCHAEFER, Norbert, 60320 Frankfurt/Main (DE); HAAS, Martin, 65760 Eschborn (DE); KUNATH, Ivo, 61476 Kronberg/Taunus (DE); STOLPER, Michael, 65760 Eschborn (DE)
(74) Vertreter: Zetterer, Gerd
(86) Internationale Anmeldenummer: PCT/EP2008/004856
(87) Internationale Veröffentlichungsnummer: WO 2009/003580

(56) Entgegenhaltungen:
- EP-A- 0 226 564
- EP-A- 0 795 342
- WO-A-2006/037638
- DE-A1- 19 704 920
- US-A- 5 492 147
- US-A1- 2002 077 603
- US-A1- 2003 060 804
- US-A1- 2005 272 002
- US-A1- 2006 058 734

## Beschreibung

Die Erfindung betrifft ein elektrisches Rasiergerät oder ein elektrisches Mundpflegegerät, beispielsweise eine elektrische Zahnbürste, die eine flüssigkeitsdichte Trennstelle zwischen einem Handstück und einem damit verbindbaren Zusatzteil aufweisen, mit einer Ventilkopplung mit einem Abgabeteil und einem Aufnahmeteil zum Übertragen eines flüssigen oder pastösen Mittels.

Eine entsprechende Ventilkopplung ist beispielsweise aus der DE 19704920 A1 bekannt. Nach erfolgter Übertragung eines flüssigen oder pastösen Mittels und folgender Trennung des Abgabeteils vom Aufnahmeteil können konstruktionsbedingt Reste des Mittels am Abgabeteil und dem Aufnahmeteil hängenbleiben und eintrocknen, sodaß bei einer späteren Kopplung des Abgabeteils mit dem Aufnahmeteil die Übertragung des flüssigen oder pastösen Mittels blockiert

US 2005 27 2002 offenbart ein elektrisches Mundpflegegerät gemäß dem Oberbegriff der Ansprüche 1, 6 und 9.

Demgegenüber liegt der Erfindung die Aufgabe zu Grunde, ein elektrisches Rasiergerät oder ein elektrisches Mundpflegegerät mit einer verbesserten Ventilkopplung zu schaffen, bei der die Funktion der Ventilkopplung nicht gefährdet ist.

Diese Aufgabe wird durch den gegenstand der unabhängigen Ansprüche 1, 6 und 9 gelöst.

In einem ersten Ausführungsbeispiel ist vorgesehen, dass das Abgabeteil fingerartig und hohl ausgestaltet ist, dass zumindest eine Kuppe des Abgabeteils aus einem elastischen Material besteht und einen Ventilschlitz aufweist, dass das Aufnahmeteil eine Einbauchung mit einer Kuppe mit einem Ventilschlitz aufweist und aus einem elastischen Material besteht, und dass im Koppelzustand eine Außenseiten der Kuppe des Abgabeteils und eine Innenseite der Kuppe des Aufnahmeteils kraft- und/oder formschlüssig aneinander anliegen, wodurch ein Hohlraum vermieden ist, in dem sich Reste eines fließfähigen Mittels am Abgabeteil und dem Aufnahmeteil ansammeln, aushärten, eintrocknen oder verklumpen können, und dadurch eine sichere Funktion der Ventilkopplung gewährleistet ist.

Die Kuppe des Abgabeteils ist beispielsweise durch ein fingerartiges und hohl ausgestaltetes, einstückiges Formteil gebildet, das unterhalb der Kuppe von einer starren Hülse umfasst ist, wodurch einerseits das Abgabeteil eine mechanische Stabilität erhält und andererseits der Bereich der Kuppe formelastisch erhalten bleibt. Das Aufnahmeteil ist vorzugsweise an zwei gegenüberliegenden Außenseiten quer zur Längslinie des zweiten Ventilschlitzes jeweils mit einer Verspannungsrippe versehen, wodurch hinsichtlich der Ventilfunktion (Schließfunktion) Ermüdungseffekte des Materials ausgeglichen werden. Am Aufnahmeteil kann einstückig ein Flansch angeformt sein, der zwecks einfacher Montage von einem Stützring versteift ist. Zur flüssigkeitsdichten Befestigung des Aufnahmeteils kann am Flansch ein Dichtring angeformt sein.

In einem zweiten Ausführungsbeispiel ist vorgesehen, dass das Abgabeteil fingerartig und hohl ausgestaltet ist, dass eine Kuppe des Abgabeteils aus einem elastischen Material besteht und einen Ventilschlitz aufweist, dass das Aufnahmeteil eine konkave Kuppe mit einem Ventilschlitz aufweist und aus einem elastischen Material besteht, dass das Aufnahmeteil axial federnd ausgebildet ist, und dass im Koppelzustand eine Außenseite der Kuppe des Abgabeteils und eine Außenseite der konkaven Kuppe des Aufnahmeteils kraft- und/oder formschlüssig miteinander anliegen, wodurch ein Hohlraum vermieden ist, in dem sich Reste des Mittels an dem Abgabeteil und dem Aufnahmeteil ansammeln, aushärten, eintrocknen oder verklumpen können, und dadurch eine sichere Funktion der Ventilkopplung gewährleistet ist.

Die Kuppe des Abgabeteils ist vorzugsweise durch ein fingerartiges und hohl ausgestaltetes, einstückiges Formteil gebildet, das unterhalb der Kuppe von einer starren Hülse umfasst ist, wodurch einerseits das Abgabeteil eine mechanische Stabilität erhält und andererseits der Bereich der Kuppe formelastisch erhalten bleibt. Das Aufnahmeteil weist eine axial federelastische Zone auf, die durch eine rotationssymmetrische Einschnürung gebildet ist. Dadurch liegen im Koppelzustand die Außenseite der Kuppe und die Außenseite der konkaven Kuppe kraft- und/oder formschlüssig miteinander an.

In einem dritten Ausführungsbeispiel ist vorgesehen, dass das Abgabeteil eine Hohlnadel mit einer Kuppe aufweist, dass die Hohlnadel unterhalb der Kuppe eine Querbohrung aufweist, die von einer Gummihülle umhüllt ist, dass das Aufnahmeteil ein Bauelement aus einem elastischen Material aufweist und mit einem Schlitz versehen ist, und dass im Koppelzustand die Hohlnadel mit der Querbohrung durch den Schlitz hindurch gesteckt ist und dabei die Gummihülle durch das Bauelement derart reversibel zurückgezogen ist, dass die Querbohrung freigegeben ist, wodurch ein Hohlraum vermieden ist, in dem sich Reste des Mittels an dem Abgabeteil und dem Aufnahmeteil ansammeln, aushärten, eintrocknen oder verklumpen können, und dadurch eine sichere Funktion der Ventilkopplung gewährleistet ist.

Die Gummihülle weist am freien Ende vorzugsweise einen Verstärkungsring aus starrem Material auf, der als eine Anschlagsfläche zum axialen Verschieben der Gummihülle dient, wobei das Aufnahmeteil einen Stützring aus starrem Material aufweist, der mit dem Verstärkungsring zum axialen Verschieben korrespondiert. Die Hohlnadel ist vorzugsweise von der Gummihülle mit einem lichten Spiel umhüllt, wodurch das axiale Verschieben der Gummihülle auf der Hohlnadel erleichtert ist. Die Gummihülle weist vorzugsweise einen innenliegenden Dichtring auf, der im entkoppelten Zustand die Querbohrung der Hohlnadel nach außen verschließt, wodurch sich außerhalb der Hohlnadel bzw. der Querbohrung keine Reste des Mittels bilden, ansammeln und aushärten oder erklumpen könnten.

Die Ventilkopplung ist in dem elektrischen Rasiergerät oder dem elektrischen Mundpflegegerät, beispielsweise in einer elektrischen Zahnbürste, als eine Trennstelle zwischen einem Handstück und einem damit verbindbaren Zusatzteil angeordnet.

Die Erfindung wird an Hand von drei Ausführungsbeispielen näher beschrieben. Es zeigt:
- Fig. 1: in einer geschnittenen Seitenansicht das Abgabeteil und das Aufnahmeteil als ein erstes Ausführungsbeispiel einer Ventilkopplung;
- Fig. 2: in einer geschnittenen Seitenansicht ein Abgabeteil;
- Fig. 3: in einer geschnittenen Seitenansicht ein Aufnahmeteil;
- Fig. 4: in einer teilweise geschnittenen Seitenansicht die Ventilkopplung nach den Fig. 1 bis 3 in einer elektrische Zahnbürste mit einem Handstück und einem damit verbindbaren Bürstenaufsatzteil;
- Fig. 5: in einer perspektivischen Seitenansicht das Abgabeteil nach Fig. 2;
- Fig. 6: in einer perspektivischen Seitenansicht das Aufnahmeteil nach Fig. 3;
- Fig. 7: in einer perspektivischen Seitenansicht die Ventilkopplung nach Fig. 1, jedoch mit zwei gegenüber angeordneten Rippen;
- Fig. 8: in einer geschnittenen Seitenansicht ein Abgabeteil und ein Aufnahmeteil als ein zweites Ausführungsbeispiel einer Ventilkopplung;
- Fig. 9: in einer perspektivischen Seitenansicht die Ventilkopplung nach Fig. 8;
- Fig. 10: in einer vergrößerten Darstellung den Bereich der Kuppen nach Fig. 8;
- Fig. 11: in einer geschnittenen Seitenansicht ein Abgabeteil und ein Aufnahmeteil als ein drittes Ausführungsbeispiel einer Ventilkopplung, und
- Fig. 12: die Ventilkopplung nach Fig. 11, jedoch im gekoppelten Zustand.

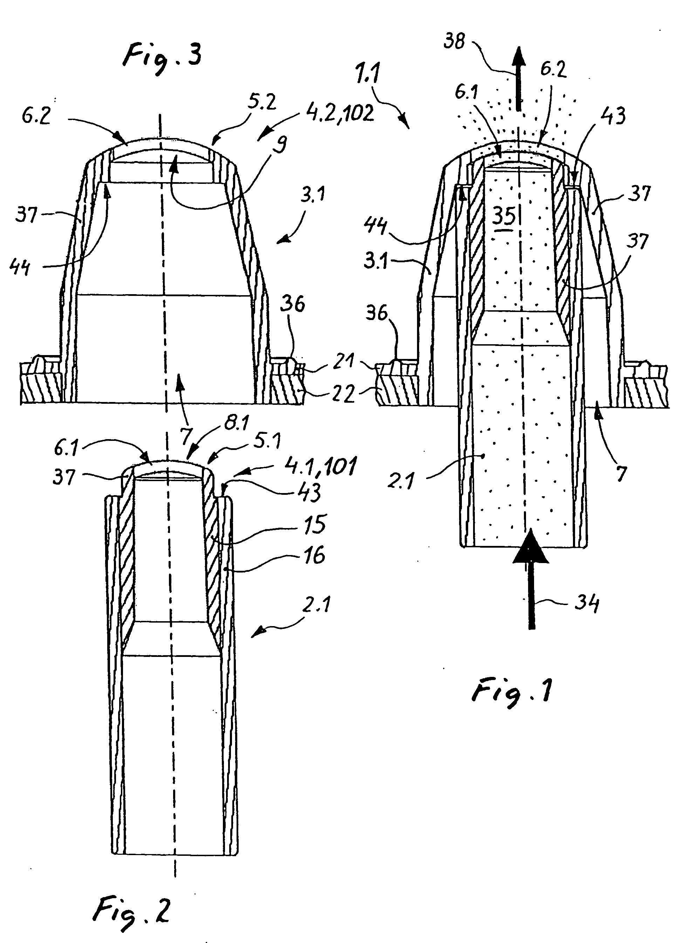

Fig. 1 zeigt in einer geschnittenen Seitenansicht eine selbstschließende Ventilkopplung 1.1 mit einem Abgabeteil 2.1 und einem Aufnahmeteil 3.1 nahezu in einer Endposition eines gekoppelten Zustands zum Übertragen eines flüssigen oder pastösen Mittels 35. Das Abgabeteil 2.1 ist fingerartig und hohl ausgestaltet, wobei zumindest eine Kuppe 5.1 des Abgabeteils 2.1 aus einem elastischen Material 37 besteht und einen Ventilschlitz 6.1 eines ersten Schlitzventils 4.1 als ein Abgabeventil 101 (Fig. 2) aufweist. Das fingerhutartige Aufnahmeteil 3.1 weist eine Einbauchung 7 mit einer Kuppe 5.2 mit einem Ventilschlitz 6.2 eines zweiten Schlitzventils 4.2 als ein Aufnahmeventil 102 (Fig. 3) auf, und besteht aus einem elastischen Material 37. Im Koppelzustand liegen eine Außenseite 8.1 (Fig. 2) der Kuppe 5.1 des Abgabeteils und eine Innenseite 9 (Fig. 3) der Kuppe 5.2 des Aufnahmeteils kraft- und/oder formschlüssig aneinander an, wobei sich der Druck des Mittels 35 durch die gedehnte Außenseite 8.1 auf die Innenseite 9 der Kuppe 5.2 überträgt und damit den Ventilschlitz 6.2 und damit das Schlitzventil 4.2 öffnet, wodurch ein Hohlraum vermieden ist, in dem sich Reste des Mittels 35 am Abgabeteil 2.1 und dem Aufnahmeteil 3.1 festsetzen können. Eine Ringfläche 43 des Endstücks einer Hülse 16 des Abgabeteils und eine Ringfläche 44 an der innenseitigen Kuppe 5.2 des Aufnahmeteils bilden einen Anschlag.

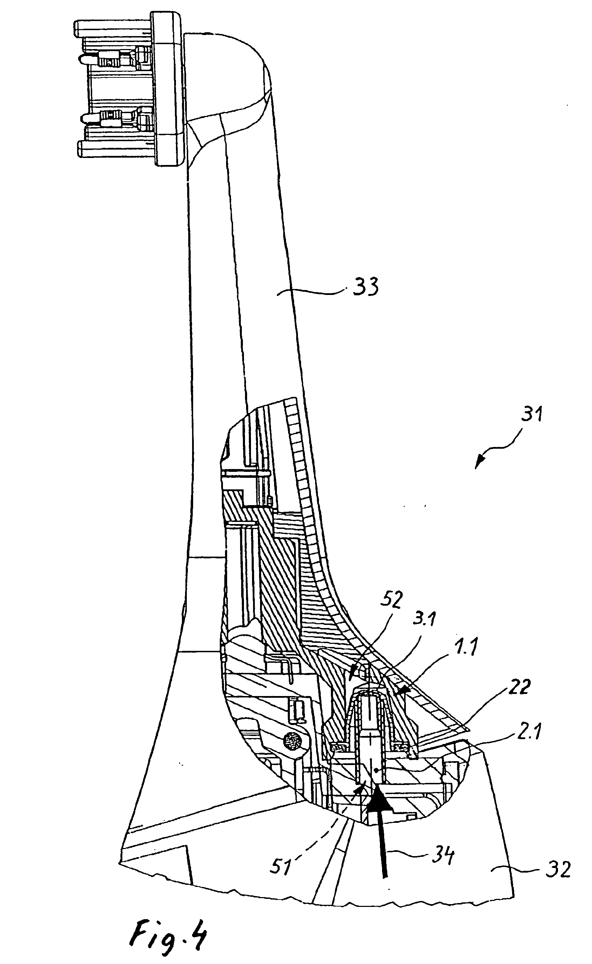

Der Pfeil 34 zeigt die Fließrichtung (Eintritt) des Mittels 35 in das Abgabeteil 2.1 an; der Pfeil 38 zeigt die Fließrichtung (Austritt) des Mittels 35 aus dem Aufnahmeteil 3.1, zum Beispiel in ein Bürstenaufsatzteil 33 nach Fig. 4.

Fig. 2 zeigt in einer geschnittenen Seitenansicht das Abgabeteil 2.1, das aus einem fingerartigen und hohl ausgestalteten, einteiligen Formteil 15 aus elastischem Material 37 und einer starren Hülse 16 aus festem Material - vorzugsweise aus nichtrostendem Metall - besteht, wobei das Formteil 15 zur Versteifung und zur ortsfesten Befestigung des Abgabeteils 2.1 mit der Hülse 16 unterhalb der Kuppe 5.1 fest verbunden ist, vorzugsweise durch Vulkanisation. Das Abgabeteil 2.1 ist dadurch so beschaffen, dass lediglich der Bereich der Kuppe 5.1 mit dem Ventilschlitz 6.1 formelastisch ist und sich so an die Innenseite 9 des Aufnahmeteils 3.1 anschmiegen kann. Die Kuppe 5.1 des elastischen Formteils 15 ist konvex nach außen gewölbt, so dass von innen anstehender Druck des Mittels 35 die Kuppe 5.1 nach außen dehnt und damit den Ventilschlitz 6.1 und damit das Schlitzventil 4.1 öffnet.

Fig. 3 zeigt in einer geschnittenen Seitenansicht das Aufnahmeteil 3.1. Das Aufnahmeteil 3.1 ist im Anfangsbereich der Einbauchung 7 mit einem radial umlaufenden Flansch 21 und mit einem starren Stützring 22 versehen, der fest mit dem Flasch 21 verbunden ist. Ein am Flansch 21 angeformter Dichtring 36 dient zur flüssigkeitsdichten Montage des Aufnahmeteils 3.1, wobei der starre Stützring 22 den Flansch 21 als Montagehilfe stabilisiert. Das Aufnahmeteil 3.1 kann beispielsweise in einem auswechselbaren Teil, insbesondere einer Aufsteckbürste 33 (Fig. 4) für eine elektrische Zahnbürste, eingebaut.

Die Fig. 2 und 3 zusammengenommen zeigen die Ventilkopplung 1.1 vor oder nach einer Kopplung des Abgabeteils 2.1 mit dem Aufnahmeteil 3.1.

Wie Fig. 4 zeigt kann das Abgabeteil 2.1 am Austritt des Flüssigkeitskanals aus einem Handstück 32 einer elektrischen Zahnbürste und das Aufnahmeteil 3.1 am Eintritt eines Flüssigkeitskanals in die Aufsteckbürste 33 angeordnet sein. Um ein Austreten des Mittels 35 im gekoppelten Zustand und ein Eintrocknen im getrennten Zustand zu verhindern, ist die Kuppe 5.1 des Abgabeteils 2.1 mit einem Ventilschlitz 6.1 und die Kuppe 5.2 des Aufnahmeteils 3.1 mit einem Ventilschlitz 6.2 versehen. Die Schlitzventile 4.1, 4.2 dichten in eine Richtung ab wie ein Rückschlagventil. Durch den von einer Pumpe auf das Mittel 35 ausgeübten Druck auf die Kuppe 5.1 des Abgabeteils 2.1 dehnt sich der Ventilschlitz 6.1 des ersten Schlitzventils 4.1 und öffnet sich.

Das Aufnahmeteil 3.1 in der Aufsteckbürste 33 hat ebenfalls die Form einer Kuppe 5.2 mit einem Ventilschlitz 6.2 zum Durchtritt des Mittels 35. Diese Kuppe 5.2 besitzt einen solchen Innendurchmesser, dass die Kuppe 5.1 des ersten Schlitzventils 4.1 komplementär genau hineinpasst. Durch ein kleines Übermaß am Schlitzventil 4.1, z.B. durch kleine außen liegende Rippen, wird nach dem Fügen radial oder axial Druck von Innen auf das Schlitzventil 4.2 ausgeübt. Dadurch wird der Ventilschlitz 4.2 der Kuppe 5.2 geöffnet, sobald die beiden Schlitzventile 4.1, 4.2 gefügt sind. Das Schlitzventil 4.1 wird durch den von innen anstehenden Druck des Mittels 35 geöffnet; das Schlitzventil 4.2 durch den Druck, den das Schlitzventil 4.1 auf das Schlitzventil 4.2 nach dem Ineinanderfügen ausübt. Nach dem Trennen der Ventilkopplung 1.1 schließen sich beide Schlitzventile 4.1, 4.2 durch die Eigenspannung des Materials 37.

Fig. 4 zeigt in einer teilweise geschnittenen Seitenansicht die Ventilkopplung 1.1 gemäß den Fig. 1 bis 3 in einer elektrische Zahnbürste 31 mit einem Handstück 32 und einer von diesem abnehmbaren Aufsteckbürste 33. Im Handstück 32 ist ein Vorratsbehälter für das Mittel 35 mit einer Pumpe und einem Flüssigkeitskanal 51 zum Abgabeteil 2.1 hin angeordnet, wobei als Mittel 35 beispielsweise ein Zahnpflegemittel vorgesehen ist, das über die Ventilkopplung 1.1 und über einen Flüssigkeitskanal 52 in die Aufsteckbürste 33 übertragen werden kann. Die Pumpe sorgt für den erforderlichen Druckaufbau zum Übertragen bzw. Fördern des Mittels 35 über die Ventilkopplung in die Aufsteckbürste 33.

Bei elektrischen Geräten des persönlichen Bedarfs kann es vorteilhaft sein, die mechanische Wirkung des Gerätes mit flüssigen Mitteln, die während einer Benutzung appliziert werden, zu unterstützen. So kann es in einem elektrischen Rasierer vorteilhaft sein, während der Rasur eine Pre-Shave-Lotion aufzutragen, die ein leichtes Gleiten auf der Haut unterstützt und Hautirritationen reduziert. Insbesondere in elektrischen Zahnbürsten kann es vorteilhaft sein, die Zahnpflegesubstanz vor und während des Putzens aus einem Reservoir in dem Handstück in den Bürstenkopf zu pumpen und so immer eine optimale Menge frischer Substanz nachzufördern.

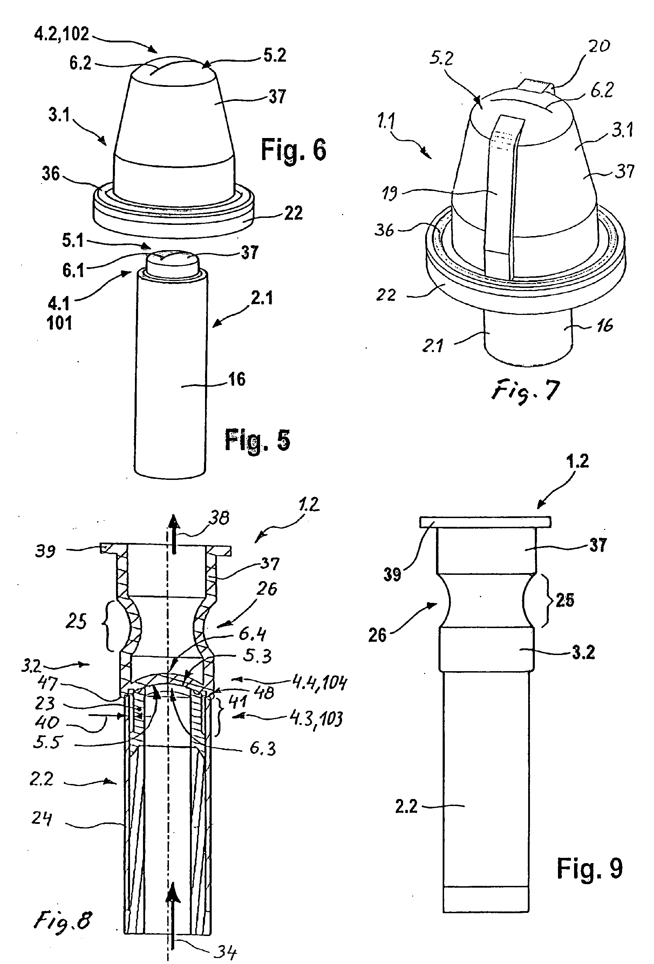

Fig. 5 zeigt in einer perspektivischen Seitenansicht das Abgabeteil 2.1 nach Fig. 1. Fig. 6 zeigt in einer perspektivischen Seitenansicht das Aufnahmeteil 3.1 nach Fig. 3.

Fig. 7 zeigt in einer perspektivischen Seitenansicht die Ventilkopplung nach Fig. 1, wobei das Aufnahmeteil 3.1 zusätzlich an zwei gegenüberliegenden Außenseiten 17, 18 quer zur Längslinie des zweiten Ventilschlitzes 6.2 jeweils eine Verspannungsrippe 19, 20 aufweist.

Da das Aufnahmeteil 3.1 im gekoppelten Zustand unter ständiger Spannung steht, kann es durch Alterungseffekte des elastischen Materials 37 dazu kommen, dass der Ventilschlitz 6.2 nicht mehr völlig schließt und dadurch das Schlitzventil 4.2 undicht wird. Um das zu vermeiden, wird das Schlitzventil 4.2 von außen unter leichte Vorspannung gesetzt. Dazu sind an dem Aufnahmeteil 3.1 außenseitig zwei oder mehrere kleine, gegenüberliegende Rippen 19, 20 angeformt. Dies führt beim Fügen der Kuppe 5.1 in die dafür vorgesehen Einbauchung 7 dazu, dass die Kuppe 5.2 unter einer Vorspannung nach innen gesetzt wird, die den zweiten Ventilschlitz 6.2 fester zudrückt, wodurch Ermüdungseffekte des Materials 37 ausgeglichen werden.

Da die zwei kuppelförmig gestalteten Schlitzventile 6.1, 6.2 im gekoppelten Zustand eng aneinander anliegen, ist die Menge an Mittel 35 bzw. Zahnpasta, die in den Zwischenraum zwischen den zwei Schlitzventilen 6.1, 6.2 austreten könnte, äußerst gering und damit eine Verstopfungsgefahr bzw. Verklebungsgefahr praktisch auszuschließen. Als vorteilhaft hat sich herausgestellt, das Aufnahmeteil 3.1 in der auswechselbaren Aufsteckbürste 33 immer durch das Abgabeteil 2.1 axial vorzuspannen. Dadurch hat man immer eine enge Anlagefläche der Kuppen 5.1, 5.2 aneinander, wodurch sich praktisch kein nennenswertes Volumen ergibt, das sich mit dem Mittel 35 füllen könnte. Durch die axiale Vorspannung nach dem Fügen, die im Bereich von einigen zehntel Millimetern bis zu zwei oder mehr Millimetern variieren kann, ist auch unter dem Einfluss von Positionierungstoleranzen ein sicheres Abdichten nach außen und ein Öffnen des Ventils des Aufnahmeteils 3.1 gegeben.

Ein zweites Ausführungsbeipiel einer Ventilkopplung 1.2 mit einem Abgabeteil 2.2 und einem Aufnahmeteil 3.2 im gekoppelten Zustand zum Übertragen eines flüssigen oder pastösen Mittels 35 ist in Fig. 8 in einer geschnittenen Seitenansicht dargestellt. Das Abgabeteil 2.2 ist fingerartig und hohl ausgestaltet, wobei eine Kuppe 5.3 des Abgabeteils 2.2 aus einem elastischen Material 37 besteht und einen Ventilschlitz 6.3 eines Schlitzventils 4.3 als ein Abgabeventil 103 aufweist. Das Aufnahmeteil 3.2 ist mit einer konkaven Kuppe 5.5 mit einem Ventilschlitz 6.4 eines Schlitzventils 4.4 eines Aufnahmeventils 104 versehen und besteht aus einem elastischen Material 37. Das Aufnahmeteil 3.2 ist axial federnd ausgebildet. Im Koppelzustand liegen eine Außenseite 8.2 der Kuppe 5.3 und eine Außenseite 8.3 der konkaven Kuppe 5.5 kraft- und/oder formschlüssig aneinander an, wobei ein Dichtring 47 um die konkave Kuppe 5.5 herum mit einem Ende 48 der Hülse 24 in einer Außenabdichtung in Kontakt steht.

Die Kuppe 5.3 des Abgabeteils 2.2 ist durch ein fingerartiges und hohl ausgestaltetes, einstückiges Formteil 23 gebildet, das unterhalb der Kuppe 5.3 von einer starren Hülse 24 aus festem Material - vorzugsweise aus nichtrostendem Metall - umfasst ist. Die Hülse 24 dient zur Versteifung und zur ortsfesten Befestigung des Formteils 23 und ist mit dem Formteil 23 fest verbunden, vorzugsweise durch Vulkanisation. Das Abgabeteil 2.2 ist dadurch so beschaffen, dass lediglich der Bereich der Kuppe 5.3 mit dem Ventilschlitz 6.3 formelastisch ist.

Das Aufnahmeteil 3.2 weist eine axial federelastische Zone 25 auf, die durch eine rotationssymmetrische Einschnürung 26 gebildet ist. Dadurch wird eine federelastische Kopplung des Aufnahmeteils 3.2 mit dem Abgabeteil 2.2 erreicht.

Fig. 9 zeigt in einer perspektivischen Seitenansicht die Ventilkopplung 1.2 nach Fig. 8.

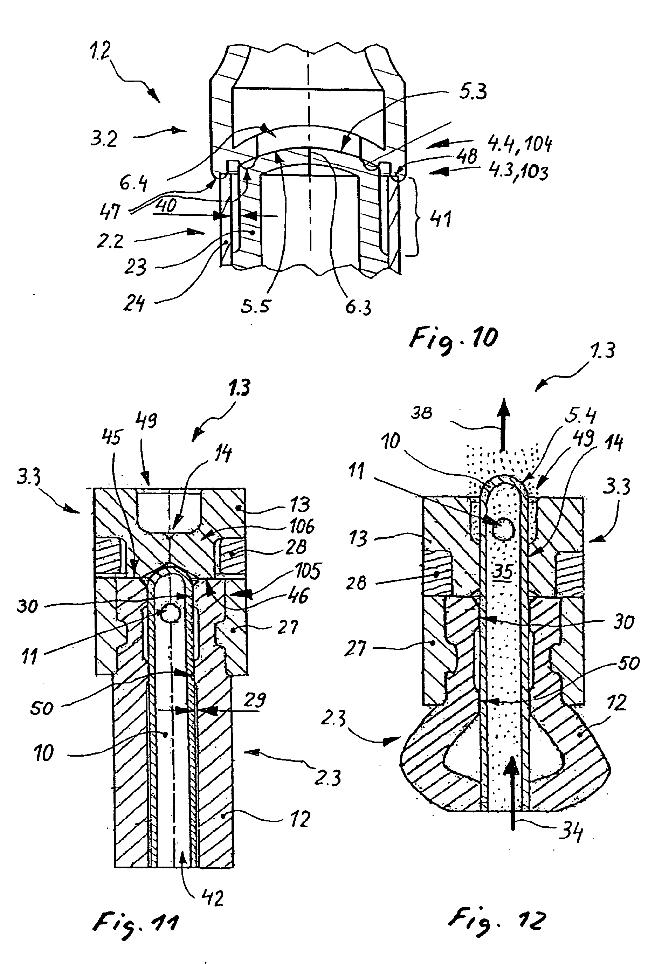

Fig. 10 zeigt in einer vergrößerten Darstellung den Bereich der Kuppe 5.3 und der konkaven Kuppe 5.5 nach Fig. 8. Eine besonders hohe Elastizität der Kuppe 5.3 wird dadurch erreicht, dass im Endbereich 41 zwischen der Hülse 24 und dem Abgabeteil 2.2 ein Ringspalt 40 angeordnet ist, wodurch sich das Formteil 23 bei axialem Druck im Durchmesser radial nach außen (Stauchung) bewegen kann. Auch ist damit durch die Hülse 24 ein mechanischer Schutz des elastischen Formteils 23 gegeben.

Die beiden elastischen Kuppen 5.3, 5.5 werden stirnseitig mit Übermaß aufeinander gefügt, wobei die stirnseitigen Flächen der Kuppen 5.3, 5.5 komplementär gewölbt sind. Das Aufnahmeteil 3.2 ist so gebaut, dass es sich durch Verformung leicht axial elastisch verkürzen lässt. Durch den Druck, den die beiden Kuppen 5.3, 5.5 im gefügten Zustand auf die konvexe Stirnfläche ausüben, werden Spannungen im Material aufgebaut. Dadurch wird der Ventilschlitz 6.3 im konvex geformten Teil geöffnet. Damit ist ein Schlitzventil 4.3 als ein Abgabeventil 103 bereits nach dem Fügen geöffnet und muss nicht mehr durch Druckaufbau des Mittels 35 geöffnet werden.

Ein drittes Ausführungsbeispiel einer Ventilkopplung 1.3 mit einem Abgabeteil 2.3 und einem Aufnahmeteil 3.3 zum Übertragen eines flüssigen oder pastösen Mittels 35 ist in Fig. 11 in einer geschnittenen Seitenansicht dargestellt. Das Abgabeteil 2.3 weist eine Hohlnadel 10 mit einer Kuppe 5.4 auf, wobei die Hohlnadel 10 unterhalb der Kuppe 5.4 eine Querbohrung 11 hat, die von einer elastischen Hülle, beispielsweise einer Gummihülle 12 umhüllt ist, die im nicht gefügten Zustand die Querbohrung 11 nach außen abdichtet, und so ein Abgabeventil 105 bildet, so dass die Flüssigkeit 35 in der Kanüle 42 der Hohlnadel 10 nicht eintrocknen oder austreten kann. Die Fig. 11 zeigt die Situation unmittelbar vor dem Fügen. Das Aufnahmeteil 3.3 weist ein Bauelement 13 aus einem elastischen Material auf und ist mit einem Schlitz 14 versehen, und bildet ein Aufnahmeventil 106. Um den Schlitz 14 herum ist innenseitig eine Vertiefung 49 angeordnet. Im Koppelzustand (Fig. 12) ragt die Hohlnadel 10 mit der Querbohrung 11 durch den Schlitz 14 hindurch. Dabei ist die Gummihülle 12 durch das Bauelement 13 derart reversibel zurückgezogen, dass die Querbohrung 11 freigegeben ist.

Die Gummihülle 12 weist am freien Ende einen Verstärkungsring 27 aus starrem Material auf, der als eine Anschlagsfläche zum axialen Verschieben der Gummihülle 12 dient, wobei das Aufnahmeteil 3.3 einen Stützring 28 aus starrem Material aufweist, der mit dem Verstärkungsring 27 zum axialen Verschieben korrespondiert. Die Gummihülle 12 umhüllt die Hohlnadel 10 vorzugsweise mit einem lichten Spiel 29, wodurch das axiale Verschieben der Gummihülle 12 auf der Hohlnadel 10 erleichtert ist.

Die Gummihülle 12 weist einen innenliegenden Dichtring 30 auf, der im entkoppelten Zustand die Querbohrung 11 nach außen verschließt. Ein weiterer innenliegender Dichtring 50 der Gummihülle 12 unterhalb der Querbohrung 11 sorgt dafür, dass keine weitere Kontamination des Mittels 35 über den Bereich der Querbohrung 11 hinaus an der äußeren Seite der Hohlnadel 10 entstehen kann.

Fig. 12 zeigt die Ventilkopplung 1.3 nach Fig. 11, jedoch im gekoppelten Zustand beim Übertragen eines flüssigen oder pastösen Mittels 35. Die Hohlnadel 10 ist durch den Schlitz 14 des Bauelements 13 eingetaucht, wobei das Mittel 35 aus der Querbohrung 11 über die Vertiefung 49 austritt. Beim Stauchen der Gummihülle 12 wird diese nach außen verformt.

Die am Ende geschlossene Hohlnadel 10 mit einer Querbohrung 11 sitzt in einer zylindrischen Gummihülle 12. Die Gummihülle 12 dichtet im entspannten Zustand die Querbohrung 11 in der Stahlkanüle 42 nach außen ab. Das Gegenstück ist ein elastisches Bauelement 13, welches in der Mitte einen Schlitz 14 aufweist. Während des Fügens des dritten Abgabeteils 2.3 mit dem Aufnahmeteil 3.3 setzt eine Ringfläche 45 als Endteil der Gummihülle 12 mit einer Ringfläche 46 um den Schlitz 14 auf und dichtet radial nach außen ab. Dann penetriert die (Stahl-) Hohlnadel 10 durch den Schlitz 14 in das elastische Bauelement 13 des Gegenstückes und die Gummihülle 12 um die Hohlnadel 10 wird zeitgleich komprimiert und verformt. Im gefügten Zustand befindet sich die Querbohrung 11 in der Kanüle 42 unterhalb der Dichtrings 36 des elastischen Bauelements 13. Dadurch ist eine Abdichtung der Kanüle 42 nach außen gewährleistet. Wird die Ventilkopplung 1.3 wieder getrennt, so schließt sich der Schlitz 14 nach dem Herausziehen der Hohlnadel 10 wieder und die Gummihülle 12 nimmt ihre ursprüngliche Form wieder ein. Dadurch dichtet das elastische Bauelement 13 ab und der Dichtring 30 in der zylindrischen Gummihülle 12 schiebt sich wieder über die Querbohrung 11 und dichtet das System (Abgabeteil 2.3 und Aufnahmeteil 3.3) wieder ab.

Die Erfindung beinhaltet somit eine serielle Kombination von zwei Ventilen 4.1-4.4 an einer Kopplungsstelle (Ventilkopplung 1.1-1.3) eines Flüssigkeitsstromes. An den Enden zweier Flüssigkeitskanäle, die nach Trennung der Komponenten offen sind, ist jeweils ein Ventil vorgesehen. Diese Ventile (Schlitzventile 4.1-4.4) dichten im gekoppelten Zustand zum Außenbereich ab, so dass kein fließfähiges Mittel 35 die Flüssigkeitskanäle verlassen kann. Die Ventile dichten auch nach Trennen der Kopplungsstelle die nun offenen Kanäle gegen die Außenwelt ab, so dass kein Mittel 35 austreten kann oder die Kanäle durch Feuchtigkeitsverlust schnell eintrocknen. Durch eine geschickte Formgebung der Ventile 4.1-4.4 bleibt das Mittel 35 auch nach Trennung der Ventile 4.1-4.4 praktisch völlig innerhalb des abgedichteten Bereiches und tritt nicht nach außen aus. Dadurch ist das Risiko, dass eingetrocknete Reste des Mittels 35 die Kopplungsstelle oder das Ventil blockieren, praktisch ausgeschlossen. Die Ventile 4.1-4.4 sind so gebaut und angeordnet, dass sie sich gut hintereinander auf kleinstem Bauraum anordnen lassen.

### Bezugsziffernliste:

- 1.1: Ventilkopplung
- 1.2: Ventilkopplung
- 1.3: Ventilkopplung
- 2.1: Abgabeteil
- 2.2: Abgabeteil
- 2.3: Abgabeteil
- 3.1: Aufnahmeteil
- 3.2: Aufnahmeteil
- 3.3: Aufnahmeteil
- 4.1: Schlitzventil
- 4.2: Schlitzventil
- 4.3: Schlitzventil
- 4.4: Schlitzventil
- 5.1: Kuppe
- 5.2: Kuppe
- 5.3: Kuppe
- 5.4: Kuppe
- 5.5: Konkave Kuppe
- 6.1: Ventilschlitz
- 6.2: Ventilschlitz
- 6.3: Ventilschlitz
- 6.4: Ventilschlitz
- 7: Einbauchung
- 8.1: Außenseite
- 8.2: Außenseite
- 9: Innenseite
- 10: Hohlnadel
- 11: Querbohrung
- 12: Gummihülle
- 13: Bauelement
- 14: Schlitz
- 15: Formteil
- 16: Hülse
- 17: Außenseite
- 18: Außenseite
- 19: Verspannungsrippe
- 20: Verspannungsrippe
- 21: Flansch
- 22: Stützring
- 23: Formteil
- 24: Hülse
- 25: Federelastische Zone
- 26: Rotationssymmetrische Einschnürung
- 27: Verstärkungsring
- 28: Stützring
- 29: Spiel
- 30: Dichtring
- 31: Elektrische Zahnbürste
- 32: Handstück
- 33: Bürstenaufsatzteil
- 34: Pfleil/ Fließrichtung (Eintritt)
- 35: Mittel
- 36: Dichtring
- 37: Elastisches Material
- 38: Pfleil/ Fließrichtung (Austritt)
- 39: Flansch
- 40: Ringspalt
- 41: Endbereich
- 42: Kanüle
- 43: Ringfläche
- 44: Ringfläche
- 45: Ringfläche
- 46: Ringfläche
- 47: Dichtring
- 48: Ende/ Hülse 24
- 49: Vertiefung
- 50: Dichtring
- 51: Kanal
- 52: Kanal
- 101, 103, 105: Abgabeventil
- 102, 104, 106: Aufnahmeventil

## Patentansprüche

1. Elektrisches Rasiergerät oder elektrisches Mundpflegegerät mit einer selbstschließenden Ventilkopplung (1.1) mit einem Abgabeteil (2.1) und einem Aufnahmeteil (3.1) zum Übertragen eines flüssigen oder pastösen Mittels (35), **dadurch gekennzeichnet, dass** das Abgabeteil (2-1) fingerartig und hohl ausgestaltet ist, wobei zumindest eine Kuppe (5.1) des Abgabeteils (2.1) aus einem elastischen Material (37) besteht und einen Ventilschlitz (6.1) eines ersten Schlitzventils (4.1) als ein Abgabeventil (101) aufweist, das fingerhutartige Aufnahmeteil (3.1) eine Einbauchung (7) mit einer Kuppe (5.2) mit einem Ventilschlitz (6.2) eines zweiten Schlitzventils (4.2) als ein Aufnahmeventil (102) aufweist, und aus einem elastischen Material (37) besteht, wobei im Koppelzustand eine Außenseite (8.1) der Kuppe (5.1) des Abgabeteils und eine Innenseite (9) der Kuppe (5.2) des Aufnahmeteils kraft- und/oder formschlüssig aneinander anliegen, wobei sich ein Druck des zu übertragenden Mittels (35) durch die gedehnte Außenseite (8.1) auf die Innenseite (9) der Kuppe (5.2) überträgt und damit den Ventilschlitz (6.2) und damit das Schlitzventil (4.2) öffnet.

2. Elektrisches Rasiergerät oder elektrisches Mundpflegegerät nach Anspruch 1, wobei eine Ringfläche (43) eines Endstücks einer Hülse (16) des Abgabeteils und eine Ringfläche an der innenseitign Kuppe (5.2) des Aufnahmeteils einen Anschlag bilden.

3. Elektrisches Rasiergerät oder elektrisches Mundpflegegerät nach Anspruch 1, wobei das Abgabeteil aus einem fingerartigen und hohl ausgestaltetem Formteil (15) aus eleastischem Material (37) und einer starren Hülse aus festem Material besteht.

4. Elektrisches Rasiergerät oder elektrisches Mundpflegegerät nach Anspruch 3, wobei die Kuppe des elastischen Formteils (15) konvex nach außen gewölbt ist.

5. Elektrisches Rasiergerät oder elektrisches Mundpflegegerät nach Anspruch 1, wobei das Aufnahmeteilman zwei gegenüberliegenden Außenseiten (17, 18) quer zur Längslinie des Ventilschlitzes (6.2) jeweils eine Verspannungsrippe (19, 20) aufweist.

6. Elektrisches Rasiergerät oder elektrisches Mundpflegegerät mit einer Ventilkopplung mit einem Abgabeteil und einem mit dem Abgabeteil koppelbaren Aufnahmeteil mit einer Ventilfunktion, die im gekoppelten Zustand ein Übertragen eines flüssigen oder pastösen Mittels vom Abgabeteil ans Aufnahmeteil gestattet, wobei im entkoppelten Zustand das Abgabeteil und das Aufnahmeteil flüssigkeitsdicht verschlossen sind, **dadurch gekennzeichnet, dass** das Abgabeteil (2.1-2.3) ein Abgabeventil (101,103,105) und das Aufnahmeteil (3.1-3.3) ein Aufnahmeventil (102, 104, 106) aufweist, dass beim An- bzw. Abkoppeln ein Öffnen oder Schließen der Abgabe- und Aufnahmeventile (101-106) durch elastische Verformung erfolgt, wobei beim Ankoppeln die Ventile (101-106) erst dann geöffnet sind, wenn das Abgabeteil (2.1-2.3) mit dem Aufnahmeteil (3.1-3.3) flüssigkeitsdicht verbunden ist und beim Abkoppeln die Ventile (101-106) geschlossen sind, bevor die flüssigkeitsdichte Verbindung getrennt ist und wobei das Abgabeteil (2.2) fingerartig und hohl ausgestaltet ist, dass eine Kuppe (5.3) des Abgabeteils (2.2) aus einem elastischen Material (37) besteht und einen Ventilschlitz (6.3) aufweist, dass das Aufnahmeteil (3.2) eine konkave Kuppe (5.5) mit einem Ventilschlitz (6.4) aufweist und aus einem elastischen Material (37) besteht, dass das Aufnahmeteil (3.2) axial federnd ausgebildet ist, und dass im Koppelzustand eine Außenseite (8.2) der Kuppe (5.3) und eine Außenseite (8.3) der konkaven Kuppe (5.5) kraft- und/oder formschlüssig aneinander anliegen und die Kuppen (5.3, 5.5) stirnseitig mit Übermaß aufeinander gefügt sind, wobei die Stirnseitigen Flächen der kuppen (5.3,5.5) homplementär gewolbt sind.

7. Elektrisches Rasiergerät oder elektrisches Mundpflegegerät nach Anspruch 6, **dadurch gekennzeichnet, dass** die Kuppe (5.3) des Abgabeteils (2.2) durch ein fingerartiges und hohl ausgestaltetes, einstückiges Formteil (23) gebildet ist, das unterhalb der Kuppe (5.3) von einer starren Hülse (24) umfasst ist.

8. Elektrisches Rasiergerät oder elektrisches Mundpflegegerät nach Anspruch 6 oder 7, **dadurch gekennzeichnet, dass** das Aufnahmeteil (3.2) eine axial federelastische Zone (25) aufweist.

9. Elektrisches Rasiergerät oder elektrisches Mundpflegegerät mit einer Ventilkopplung mit einem Abgabeteil und einem mit dem Abgabeteil koppelbaren Aufnahmeteil mit einer Ventilfunktion, die im gekoppelten Zustand ein Übertragen eines flüssigen oder pastösen Mittels vom Abgabeteil ans Aufnahmeteil gestattet, wobei im entkoppelten Zustand das Abgabeteil und das Aufnahmeteil flüssigkeitsdicht verschlossen sind, **dadurch gekennzeichnet, dass** das Abgabeteil (2.1-2.3) ein Abgabeventil (101, 103, 105) und das Aufnahmeteil (3.1-3.3) ein Aufnahmeventil (102, 104, 106) aufweist, dass beim An- bzw. Abkoppeln ein Öffnen oder Schließen der Abgabe- und Aufnahmeventile (101-106) durch elastische Verformung erfolgt, wobei beim Ankoppeln die Ventile (101-106) erst dann geöffnet sind wenn das Abgabeteil (2.1-2.3) mit dem Aufnahmeteil (3.1-3.3) flüssigkeitsdicht verbunden ist und beim Abkoppeln die Ventile (101-106) geschlossen sind, bevor die flüssigkeitsdichte Verbindung getrennt ist und wobei das Abgabeteil (2.3) eine Hohlnadel (10) mit einer Kuppe (5.4) aufweist, dass die Hohlnadel (10) unterhalb der Kuppe (5.4) eine Querbohrung (11) aufweist, die von einer elastischen Hülle (12) umhüllt ist, dass das Aufnahmeteil (3.3) ein Bauelement (13) aus einem elastischen Material (37) aufweist und mit einem Schlitz (14) versehen ist, und dass im Koppelzustand die Hohlnadel (10) mit der Querbohrung (11) durch den Schlitz (14) hindurch gesteckt ist und dabei die elastische Hülle (12) durch das Bauelement (13) derart reversibel zurückgezogen ist, dass die Querbohrung (11) freigegeben ist.

10. Elektrisches Rasiergerät oder elektrisches Mundpflegegerät nach Anspruch 9, **dadurch gekennzeichnet, dass** die elastische Hülle (12) am freien Ende einen Verstärkungsring (27) aus starrem Material aufweist.

11. Elektrisches Rasiergerät oder elektrisches Mundpflegegerät nach Anspruch 9 oder 10, **dadurch gekennzeichnet, dass** das Aufnahmeteil (3.3) einen Stützring (28) aus starrem Material aufweist.

12. Elektrisches Rasiergerät oder elektrisches Mundpflegegerät nach einem der Ansprüche 9 bis 11, **dadurch gekennzeichnet, dass** die elastische Hülle (12) die Hohlnadel (10) mit einem lichten Spiel (29) umhüllt.

13. Elektrisches Rasiergerät oder elektrisches Mundpflegegerät nach einem der Ansprüche 9 bis 12, **dadurch gekennzeichnet, dass** die elastische Hülle (12) mindestens einen innenliegenden Dichtring (30, 50) aufweist, der im entkoppelten Zustand die Querbohrung (11) nach außen verschließt.

## Claims

1. An electric shaver or electric oral care device with a self-sealing valve coupling (1.1) with a dispensing part (2.1) and a receiving part (3.1) to transfer a liquid or highly viscous agent (35), **characterized in that** the dispensing part (2.1) is finger-like and hollow in design, wherein at least a dome (5.1) of the dispensing part (2.1) is made of an elastic material (37) and has a valve slit (6.1) of a first slit valve (4.1) as a dispensing valve (101); the thimble-like receiving part (3.1) has a bulge (7) with a dome (5.2) with a valve slit (6.2) of a second slit valve (4.2) as a receiving part (102) and is made of an elastic material (37); wherein, in the coupled state, an outside (8.1) of the dome (5.1) of the dispensing part and an inside (9) of the dome (5.2) of the receiving part adjoin non-positively and/or positively, wherein a pressure of the agent (35) to be transferred transmits via the stretched outside (8.1) to the inside (9) of the dome (5.2) and therefore opens the valve slit (6.2), and therefore opens the slit valve (4.2).

2. The electric shaver or electric oral care device according to claim 1,
wherein an annular surface (43) of an end piece of a sleeve (16) of the dispensing part and an annular surface on the inside dome (5.2) of the receiving part form a stop.

3. The electric shaver or electric oral care device according to claim 1,
wherein the dispensing part comprises a finger-like, hollow shaped part (15) made of elastic material (37) and a rigid sleeve made of solid material.

4. The electric shaver or electric oral care device according to claim 3,
wherein the dome of the elastic shaped part (15) is curved convexly outward.

5. The electric shaver or electric oral care device according to claim 1,
wherein the receiving part has a respective bracing rib (19, 20) at two opposite outer sides (17, 18), transversal to the longitudinal line of the valve slit (6.2).

6. An electric shaver or electric oral care device with a valve coupling with a dispensing part and a receiving part that may be coupled with the dispensing part, with a valve function that allows a transfer of a liquid or highly viscous agent from the dispensing part to the receiving part in the coupled state; wherein in the decoupled state the dispensing part and the receiving part are sealed liquid-tight; **characterized in that** the dispensing part (2.1-2.3) has a dispensing valve (101, 103, 105) and the receiving part (3.1-3.3) has a receiving valve (102, 104, 106); **in that** an opening or closing of the dispensing and receiving valves (101 - 106) take place via elastic deformation upon coupling or, respectively, decoupling, wherein upon coupling, the valves (101-106) are only opened when the dispensing part (2.1-2.3) is connected liquid-tight with the receiving part (3.1-3.3), and upon decoupling, the valves (101-106) are closed before the liquid-tight connection is broken, and wherein the dispensing part (2.2) is finger-shaped and hollow; **in that** a dome (5.3) of the dispensing part (2.2) is made of an elastic material (37) and has a valve slit (6.3); **in that** the receiving part (3.2) has a concave dome (5.5) with a valve slit (6.4) and is made of an elastic material (37); **in that** the receiving part (3.2) is designed to be axially elastic; and **in that**, in the coupled state, an outside (8.2) of the dome (5.3) and an outside (8.3) of the concave dome (5.5) adjoin non-positively and/or positively, and the domes (5.3, 5.5) are joined with one another at their facing sides with allowance, wherein the facing surfaces of the domes (5.3, 5.5) are curved in a complementary manner.

7. The electric shaver or electric oral care device according to claim 6, **characterized in that** the dome (5.3) of the dispensing part (2.2) is formed by a finger-like, hollow, one-piece shaped part (23) that is encompassed by a rigid sleeve (24) below the dome (5.3).

8. The electric shaver or electric oral care device according to claim 6 or 7, **characterized in that** the receiving part (3.2) has an axially spring-elastic zone (25).

9. An electric shaver or electric oral care device with a valve coupling with a dispensing part and a receiving part that may be coupled with the dispensing part, with a valve function that allows a transfer of a liquid or highly viscous agent from the dispensing part to the receiving part in the coupled state, wherein in the decoupled state the dispensing part and the receiving part are sealed liquid-tight, **characterized in that** the dispensing part (2.1-2.3) has a dispensing valve (101, 103, 105) and the receiving part (3.1-3.3) has a receiving valve (102, 104, 106); **in that** an opening or closing of the dispensing and receiving valves (101-106) take place via elastic deformation upon coupling or, respectively, decoupling, wherein upon coupling, the valves (101-106) are only opened when the dispensing part (2.1-2.3) is connected liquid-tight with the receiving part (3.1-3.3), and upon decoupling, the valves (101-106) are closed before the liquid-tight connection is broken, and wherein the dispensing part (2.3) has a hollow needle (10) with a dome (5.4); **in that** the hollow needle (10) has a transversal bore (11) below the dome (5.4), which transversal bore is enclosed by an elastic sleeve (12); **in that** the receiving part (3.3) has a structural element (13) made of an elastic material (37) and is provided with a slit (14); and **in that**, in the coupled state, the hollow needle (10) with the transversal bore (11) is pushed through the slit (14), and the elastic sleeve (12) is reversibly drawn back by the structural element (13) such that the transversal bore (11) is uncovered.

10. The electric shaver or electric oral care device according to claim 9, **characterized in that** the elastic sleeve (12) has a reinforcement ring (27) made of rigid material at the free end.

11. The electric shaver or electric oral care device according to claim 9 or 10, **characterized in that** the receiving part (3.3) has a support ring (28) made of rigid material.

12. The electric shaver or electric oral care device according to any one of the claims 9 to 11, **characterized in that** the elastic sleeve encloses (12) the hollow needle (10) with a clear play (29).

13. Electric shaver or electric oral care device according to any one of the claims 9 to 12, **characterized in that** the elastic sleeve (12) has at least one inner sealing ring (30, 50) that externally seals the transversal bore (11) in the decoupled state.

## Revendications

1. Rasoir électrique ou appareil électrique d'hygiène buccale doté d'un accouplement de soupape à fermeture automatique (1.1) avec une partie d'évacuation (2.1) et une partie de réception (3.1) pour la transmission d'un moyen fluide ou pâteux (35) **caractérisé en ce que** la partie d'évacuation (2.1) est formée pour être creuse et en forme de doigt, dans lequel au moins un couvercle (5.1) de la partie d'évacuation (2.1) est composé de matériau élastique (37) et présente une fente de soupape (6.1) d'une première soupape fendue (4.1) en tant que soupape d'évacuation (101), la partie de réception en forme de doigt (3.1) présente un renfoncement (7) avec un couvercle (5.2) doté d'une fente de soupape (6.2) d'une deuxième soupape fendue (4.2) sous forme de soupape de réception (102), et composé d'un matériau élastique (37), dans lequel dans l'état couplé, un côté extérieur (8.1) du couvercle (5.1) de la partie d'évacuation et un côté intérieur (9) du couvercle (5.2) de la partie de réception se trouvent en correspondance de forme et/ou de force l'un avec l'autre, dans lequel une pression du milieu à transmettre (35) se transmet à travers le côté extérieur allongé (8.1) sur le côté intérieur (9) du couvercle (5.2) et ouvre alors la fente de soupape (6.2) et ainsi la soupape fendue (4.2).

2. Rasoir électrique ou appareil électrique d'hygiène buccale selon la revendication 1, dans lequel une surface annulaire (43) d'une pièce d'extrémité d'un manchon (16) de la partie d'évacuation et une surface annulaire sur le couvercle du côté intérieur (5.2) de la partie de réception forment une butée.

3. Rasoir électrique ou appareil électrique d'hygiène buccale selon la revendication 1, dans lequel la partie d'évacuation se compose d'un élément moulé creux et en forme de doigt (15) en matériau élastique (37) et un manchon rigide en matériau ferme.

4. Rasoir électrique ou appareil électrique d'hygiène buccale selon la revendication 3, dans lequel le couvercle de l'élément moulé élastique (15) présente une courbe convexe vers l'extérieur.

5. Rasoir électrique ou appareil électrique d'hygiène buccale selon la revendication 1, dans lequel les parties de réception de deux côtés extérieurs opposés (17, 18) dans le sens transversal par rapport à la ligne longitudinale de la fente de soupape (6.2) présentent chacune une nervure de contraction (19, 20).

6. Rasoir électrique ou appareil électrique d'hygiène buccale équipé d'un accouplement par soupape, avec une partie d'évacuation et une partie de réception pouvant être couplée à la partie d'évacuation, dotée d'une fonction de soupape, qui dans l'état couplé réalise une transmission d'un moyen fluide ou pâteux depuis la partie d'évacuation vers la partie de réception, dans lequel dans l'état découplé, la partie d'évacuation et la partie de réception sont fermées de manière étanche aux fluides, **caractérisé en ce que** la partie d'évacuation (2.1-2.3) présente une soupape d'évacuation (101, 103, 105) et la partie de réception (3.1-3.3) présente une soupape de réception (102, 104, 106), **en ce que** lors du couplage ou du découplage, une ouverture ou une fermeture des soupapes d'évacuation ou de réception (101-106) se produit par déformation élastique, dans lequel lors du couplage, les soupapes (101-106) ne sont ouvertes que lorsque la partie d'évacuation (2.1-2.3) est reliée à la partie de réception (3.1-3.3) de manière étanche aux fluides et lors du découplage, les soupapes (101-106) sont fermées, avant que la connexion étanche aux fluides ne soit séparée et dans lequel la partie d'évacuation (2.2) est conçue pour être creuse et en forme de doigt, **en ce qu'**un couvercle (5.3) de la partie d'évacuation est composé d'un matériau élastique (37) et présente une fente de soupape (6.3), **en ce que** la partie de réception (3.2) présente un couvercle concave (5.5) avec une fente de soupape (6.4) et composé d'un matériau élastique (37), **en ce que** la partie de réception (3.2) est conçue pour pouvoir être rappelée par ressort dans le sens axial, et **en ce que**, dans l'état couplé, un côté extérieur (8.2) du couvercle (5.3) et un côté extérieur (8.3) du couvercle concave (5.5) se trouvent en correspondance de forme et/ou de force l'un par rapport à l'autre et les couvercles (5.3, 5.5) sont entraînés du côté avant avec une surcharge, dans lequel les surfaces du côté avant des couvercles (5.3, 5.5) sont courbées de manière complémentaire.

7. Rasoir électrique ou appareil électrique d'hygiène buccale selon la revendication 6, **caractérisé en ce que** le couvercle (5.3) de la partie d'évacuation (2.2) est formé par un élément moulé en une seule pièce, creux et en forme de doigt (23), qui est entouré en dessous du couvercle (5.3) par un manchon rigide (24).

8. Rasoir électrique ou appareil électrique d'hygiène buccale selon la revendication 6 ou 7, **caractérisé en ce que** la partie de réception (3.2) présente une zone élastique de ressort axiale (25).

9. Rasoir électrique ou appareil électrique d'hygiène buccale équipé d'un accouplement de soupape avec une partie d'évacuation et une partie de réception pouvant être couplée avec la partie d'évacuation avec une fonction de soupape, qui dans l'état couplé réalise une transmission d'un moyen fluide ou pâteux depuis la partie d'évacuation vers la partie de réception, dans lequel dans l'état découplé la partie d'évacuation et la partie de réception sont fermées de manière étanche aux fluides, **caractérisé en ce que** la partie d'évacuation (2.1-2.3) présente une soupape d'évacuation (101, 103, 105) et la partie de réception (3.1-3.3) présente une soupape de réception (102, 104, 106), **en ce que** lors du couplage ou du découplage, une ouverture ou une fermeture des soupapes d'évacuation et de réception (101-106) s'effectue par déformation élastique, dans lequel lors du couplage, les soupapes (101-106) ne sont ouvertes que lorsque la partie d'évacuation (2.1-2.3) est reliée de manière étanche aux fluides avec la partie de réception (3.1-3.3) et lors du découplage, les soupapes (101-106) sont fermées, avant que la connexion étanche aux fluides ne soit séparée et dans lequel la partie d'évacuation (2.3) présente une canule creuse (10) avec un couvercle (5.4), **en ce que** la canule creuse (10) présente en dessous du couvercle (5.4) un alésage transversal (11), qui est entouré par une gaine élastique (12), **en ce que** la partie de réception (3.3) présente un composant (13) en matériau élastique (37) et est dotée d'une fente (14) et **en ce que**, dans l'état couplé, la canule creuse (10) passe avec l'alésage transversal (11) à travers la fente (14) et ainsi la gaine élastique (12) est retirée de manière réversible à travers le composant (13) de sorte que l'alésage transversal (11) est libéré.

10. Rasoir électrique ou appareil électrique d'hygiène buccale selon la revendication 9, **caractérisé en ce que** la gaine élastique (12) présente une bague de renforcement (27) en matériau rigide sur son extrémité libre.

11. Rasoir électrique ou appareil électrique d'hygiène buccale selon la revendication 9 ou 10, **caractérisé en ce que** la partie de réception (3.3) présente une bague de soutien (28) en matériau rigide.

12. Rasoir électrique ou appareil électrique d'hygiène buccale selon une des revendications 9 à 11, **caractérisé en ce que** la gaine élastique (12) entoure la canule creuse (10) avec un léger jeu (29).

13. Rasoir électrique ou appareil électrique d'hygiène buccale selon une des revendications 9 à12, **caractérisé en ce que** la gaine élastique (12) présente au moins une bague d'étanchéité interne (30, 50), qui ferme vers l'extérieur dans l'état découplé de l'alésage transversal (11).
